# EUROPEAN PATENT APPLICATION

(11) **EP 4 512 517 A1**
(43) Date of publication of application: **26.02.2025**
(21) Application number: 23815914.9
(22) Date of filing: 25.05.2023
(51) Int. Cl.: B01J 13/00, B01J 20/26, B01J 20/30

(54) **GRANULAR BODY FOR LITHIUM ADSORPTION AND MANUFACTURING METHOD THEREFOR**

(30) Priority: 03.06.2022 JP 2022090621
(71) Applicant: Kagoshima University, Kagoshima-shi, Kagoshima 890-8580 (JP); Sumitomo Metal Mining Co., Ltd., Tokyo 105-8716 (JP)
(72) Inventor: TAKEI, Takayuki, Kagoshima-shi, Kagoshima 890-8580 (JP); YOSHIDA, Masahiro, Kagoshima-shi, Kagoshima 890-8580 (JP); TAKANO, Masatoshi, Niihama-shi, Ehime 792-0002 (JP); ASANO, Satoshi, Niihama-shi, Ehime 792-0002 (JP)
(74) Representative: Jones, Nicholas Andrew
(86) International application number: PCT/JP2023/019431
(87) International publication number: WO 2023/234156

(57) **Abstract**

Provided is a granular body for lithium adsorption that has durability and can efficiently utilize an ability of a lithium adsorbent, and a producing method thereof.

The granular body for lithium adsorption contains a lithium adsorbent precursor and a hydrous polymer containing the precursor. The hydrous polymer allows forming a gel-state granular body. With this configuration, when the hydrous polymer contains a predetermined water content, the granular body is in a gel state. Therefore, the granular body does not get partially lost, and the durability of the granular body improves. Moreover, since the hydrous polymer allows liquid such as seawater to permeate, the lithium adsorbent as a whole can contact this liquid and the ability of the lithium adsorbent can be efficiently utilized.

## Description

### BACKGROUND

### 1. Technical Field

The present invention relates to a granular body for lithium adsorption and a producing method thereof. More particularly, the present invention relates to a granular body for lithium adsorption containing a lithium adsorbent precursor, and a producing method thereof.

### 2. Related Art

TANG Weiping, (11 June 2010), "Development of System of Collecting Lithium from Brine Water," Kagawa Industry Support Foundation, accessed 22 November 2018, <https://www.kagawa-isf.jp/wp-content/uploads/2022/02/21tang.pdf> discloses a system of collecting lithium from brine water. This document discloses a process of adsorbing lithium from brine water using a lithium adsorbent, and removing the adsorbed lithium to generate high purity Li₂CO₃. In this document, a granulated body obtained by granulating a micro powder of lithium manganese oxide into a size of 0.5 to 1 mm in diameter by PVC is used for the adsorption of lithium.

JP-T-2019-535503 discloses a porous structure for ion exchange including a) a structural support and b) coated ion exchange particles and the like. Lithium is selectively extracted from seawater and the like by this porous structure.

### Citation List

### Patent Literature

Patent Document 1: JP-T-2019-535503

### Non-Patent Literature

Non-patent Document 1: TANG Weiping, (11 June 2010), "Development of System of Collecting Lithium from Brine Water," Kagawa Industry Support Foundation, accessed 22 November 2018, <https://www.kagawa-isf.jp/wp-content/uploads/2022/02/21tang.pdf>

Nevertheless, in a granulated body or a porous body described in these documents, since the adsorbent that actually performs the adsorption of lithium, namely a powder of lithium manganese oxide and the like, is made into a predetermined size using another substance such as a binding agent, there is a problem that the adsorbent gets partially lost every time a lithium containing solution is passed through, and thus the adsorbent has a short service life for a repeated use.

Moreover, since there is a binding with a substance that does not contribute to the adsorption of lithium, there is a problem that the adsorption of lithium cannot be performed in that binding area, and an ability of the lithium adsorbent is partly unable to be used.

In view of the above-described circumstances, an object of the present invention is to provide a granular body for lithium adsorption that has durability and can efficiently utilize the ability of the lithium adsorbent, and a producing method thereof.

### SUMMARY

A granular body for lithium adsorption of a first invention includes a lithium adsorbent precursor and a hydrous polymer containing the precursor, and the hydrous polymer allows forming a gel-state granular body.

In the granular body for lithium adsorption of a second invention, which is in the first invention, the granular body for lithium adsorption is a gel-state granular body.

In the granular body for lithium adsorption of a third invention, which is in the first invention or the second invention, the hydrous polymer contains an amide group.

In the granular body for lithium adsorption of a fourth invention, which is in the third invention, the hydrous polymer containing the amide group is polyacrylamide.

In the granular body for lithium adsorption of a fifth invention, which is in any of the first invention to the fourth invention, the lithium adsorbent precursor is lithium manganese oxide.

A producing method of granular body for lithium adsorption of a sixth invention includes a suspension polymerization step of suspending an aqueous solution for suspension polymerization obtained by mixing a raw material of hydrous polymer, a lithium adsorbent precursor, and a polymerization initiator in a dispersion medium to obtain a granular body for lithium adsorption.

In the producing method of granular body for lithium adsorption of a seventh invention, which is in the sixth invention, includes a mixing step of mixing the raw material of hydrous polymer and the lithium adsorbent precursor to obtain a mixed aqueous solution before the suspension polymerization step, and in the suspension polymerization step after the mixing step, the aqueous solution for suspension polymerization obtained by mixing the polymerization initiator into the mixed aqueous solution is used.

In the producing method of granular body for lithium adsorption of an eighth invention, which is in the seventh invention, in the mixing step, a preliminarily determined amount of ethanol is added and then mixed.

In the producing method of granular body for lithium adsorption of a ninth invention, which is in any of the sixth invention to the eighth invention, the hydrous polymer is polyacrylamide, and raw materials of the polyacrylamide are acrylamide and N,N'-Methylenebisacrylamide.

In the producing method of granular body for lithium adsorption of a tenth invention, which is in any of the sixth invention to the ninth invention, the suspension polymerization step is performed in a nitrogen atmosphere in which a proportion of nitrogen gas is in a preliminarily determined range.

According to the first invention, when the granular body for lithium adsorption contains the lithium adsorbent precursor and the hydrous polymer, and the hydrous polymer contains a predetermined water content, the granular body is in a gel state. Therefore, the granular body does not get partially lost, and the durability of the granular body improves. Moreover, since the hydrous polymer allows liquid such as seawater to permeate, the lithium adsorbent as a whole can contact this liquid, and the ability of the lithium adsorbent can be efficiently utilized.

According to the second invention, since the granular body for lithium adsorption is a gel-state granular body, it can be housed directly in a capsule that allows liquid such as seawater to pass through, and be used.

According to the third invention, since the hydrous polymer contains the amide group, a water content rate of the hydrous polymer becomes high. Therefore, the lithium adsorbent as a whole can more easily contact the liquid, and the ability of the lithium adsorbent can be more efficiently utilized.

According to the fourth invention, since the hydrous polymer containing the amide group is polyacrylamide, the durability of the granular body and increased efficiency of the ability of the lithium adsorbent can both be achieved at an even higher level.

According to the fifth invention, since the lithium adsorbent precursor is lithium manganese oxide, an adsorption ability of the lithium becomes high.

According to the sixth invention, since the producing method of granular body for lithium adsorption has an aspect including the suspension polymerization step of suspending the aqueous solution for suspension polymerization obtained by mixing the raw material of hydrous polymer, the lithium adsorbent precursor, and the polymerization initiator in the dispersion medium to obtain the granular body for lithium adsorption, a hydrous polymer as a gel-state granular body containing the lithium adsorbent precursor can be obtained.

According to the seventh invention, since the producing method of granular body for lithium adsorption has an aspect including the mixing step of mixing the raw material of hydrous polymer and the lithium adsorbent precursor to obtain the mixed aqueous solution before the suspension polymerization step, and in the suspension polymerization step after this mixing step, the aqueous solution for suspension polymerization obtained by mixing the polymerization initiator into the mixed aqueous solution is used, the raw material of hydrous polymer and the lithium adsorbent precursor can be mixed before the polymerization starts, and a bias between these can be decreased to reduce composition spots.

According to the eighth invention, since the predetermined amount of ethanol is added in the mixing step, the hydrous polymer as a gel-state granular body containing the lithium adsorbent precursor can be more easily obtained.

According to the ninth invention, since the raw materials of the polyacrylamide are acrylamide and N,N'-Methylenebisacrylamide, the polyacrylamide can be easily obtained.

According to the tenth invention, since the suspension polymerization step is performed in a predetermined nitrogen atmosphere, a polymerization reaction proceeds efficiently, and thereby unreacted raw materials are reduced, and a strength of the gel constituting the granular body for lithium adsorption becomes high.

### BRIEF DESCRIPTION OF DRAWINGS

Fig. 1 is a schematic diagram of a granular body for lithium adsorption according to an embodiment of the present invention;
Fig. 2 is a flowchart of a producing method of granular body for lithium adsorption according to a first embodiment of the present invention;
Fig. 3 is a flowchart of a producing method of granular body for lithium adsorption according to a second embodiment of the present invention;
Fig. 4 is a flowchart of a producing method of granular body for lithium adsorption according to a third embodiment of the present invention;
Fig. 5 is a flowchart of a producing method of granular body for lithium adsorption according to a fourth embodiment of the present invention;
Fig. 6 is a flowchart of a producing method of granular body for lithium adsorption according to a fifth embodiment of the present invention;
Fig. 7 is a flowchart of a producing method of granular body for lithium adsorption according to a sixth embodiment of the present invention;
Fig. 8 is a flowchart of a producing method of granular body for lithium adsorption according to a seventh embodiment of the present invention;
Fig. 9A is an SEM photograph of the granular body for lithium adsorption before being used according to Example 1 of the present invention; and
Fig. 9B is an SEM photograph of the granular body for lithium adsorption after being used according to Example 1 of the present invention.

### DETAILED DESCRIPTION

Hereinafter, embodiments of the present invention will be described based on the drawings. However, the following embodiments exemplify a granular body for lithium adsorption and a producing method thereof for realization of the technical idea of the present invention, and thus the present invention does not intend to limit the granular body for lithium adsorption and the producing method thereof to the followings. Note that, members indicated in the scope of claims are not limited to the members in the embodiments.

### <Granular Body for Lithium Adsorption>

The granular body for lithium adsorption disclosed in the present specification contains a lithium adsorbent precursor and a hydrous polymer containing the precursor, and the hydrous polymer allows forming a gel-state granular body.

With this configuration, when the hydrous polymer contains a predetermined water content, the granular body is in a gel state. Therefore, the granular body does not get partially lost, and a durability of the granular body improves. Moreover, since the hydrous polymer allows liquid such as seawater to permeate, the lithium adsorbent as a whole can contact this liquid and an ability of the lithium adsorbent can be efficiently utilized.

The granular body for lithium adsorption is preferably a gel-state granular body. With this configuration, the granular body can be housed directly in a capsule that allows liquid such as seawater to pass through, and be used.

In the granular body for lithium adsorption, the hydrous polymer preferably contains an amide group. With this configuration, a water content rate of the hydrous polymer becomes high, and therefore the lithium adsorbent as a whole can more easily contact the liquid, and the ability of the lithium adsorbent can be more efficiently utilized.

In the granular body for lithium adsorption, the hydrous polymer containing the amide group is preferably polyacrylamide. With this configuration, the durability of the granular body and increased efficiency of the ability of the lithium adsorbent can both be achieved at an even higher level.

In the granular body for lithium adsorption, the lithium adsorbent precursor is preferably lithium manganese oxide. With this configuration, an adsorption ability of the lithium becomes high.

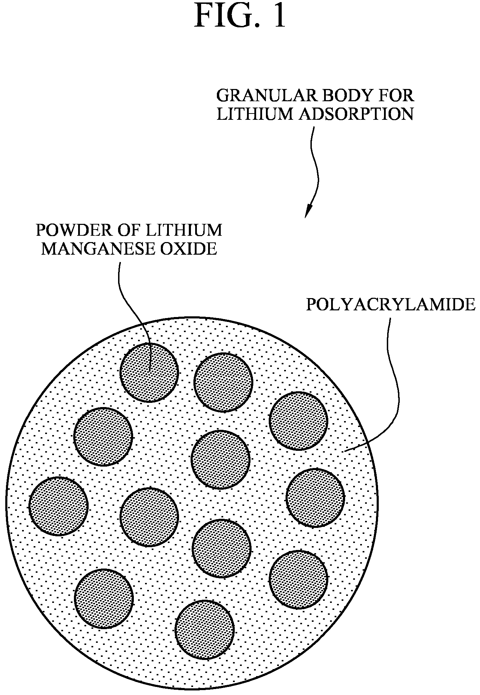

Fig. 1 illustrates a schematic diagram of the granular body for lithium adsorption according to one embodiment of the present invention. This schematic diagram schematically illustrates a state where the hydrous polymer constituting the granular body for lithium adsorption contains water content, and the granular body for lithium adsorption has turned into a gel-state. The granular body for lithium adsorption according to the present embodiment has a configuration in which the lithium adsorbent precursor is contained inside the hydrous polymer that allows forming a gel-state granular body. Fig. 1 describes polyacrylamide as one example of the hydrous polymer, and lithium manganese oxide as one example of the lithium adsorbent precursor.

### (Lithium Adsorbent Precursor)

The lithium adsorbent precursor is a compound, such as lithium manganese oxide or lithium titanate. Examples thereof include: Li_{1.6}Mn_{1.6}O₄, Li_{1.33}Mn_{1.67}O₄, Li₄Mn₅O₁₂, Li₄Ti₅O₁₂, Li₂TiO₃, Li₂MnO₃, Li₂SnO₃, LiMn₂O₄, LiAlO₂, LiCuO₂, LiTiO₂, Li₄TiO₄, Li₇Ti₁₁O₂₄, Li₃VO₄, Li₂Si₃O₇, LiFePO₄, LiMnPO₄, and Li₂CuP₂O₇.

The above-described lithium adsorbent precursor becomes the lithium adsorbent by undergoing an acid treatment before adsorbing the lithium. For example, in the case of Li_{1.6}Mn_{1.6}O₄, the lithium adsorbent precursor becomes the following lithium adsorbent by an acid treatment using hydrochloric acid.

[Formula 1] Li_{1.6}Mn_{1.6}O₄ + 1.6HCl → H_{1.6}Mn_{1.6}O₄ + 1.6LiCl

### (Hydrous Polymer)

The hydrous polymer refers to a polymer that can contain water content. By being able to contain water content, a liquid such as seawater in which lithium is contained can be impregnated inside the hydrous polymer. When the lithium adsorbent is inside the hydrous polymer, the lithium adsorbent can contact the seawater or the like, and adsorb the lithium contained in the seawater or the like.

Moreover, the hydrous polymer constituting the granular body for lithium adsorption according to the present embodiment allows forming a gel-state granular body. In addition, the hydrous polymer constituting the granular body for lithium adsorption according to the present embodiment is required to have stability against chemical substances, such as acid. As the hydrous polymer, examples include hydrous polymer containing poly(2-hydroxyethyl methacrylate), polyacrylic acid, polyvinyl alcohol, or an amide group. Among the hydrous polymer containing the amide group, polyacrylamide is further preferred. A chemical formula of this polyacrylamide will be described below. The part indicated as "..." in the chemical formula means that the same configuration is repeatedly connected. By the hydrous polymer containing the amide group being polyacrylamide, the durability of the granular body and the increased efficiency of the ability of the lithium adsorbent can both be achieved at an even higher level. As a monomer that forms the polyacrylamide, 2-propenamide, N,N'-Methylenebisacrylamide, N,N,N',N'-Tetramethylethylenediamine, N-(Hydroxymethyl)acrylamide, N-(Butoxymethyl)acrylamide, N,N-Dimethylacrylamide, N-(1,1-Dimethyl-3-oxobutyl)acrylamide can be used as examples.

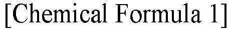

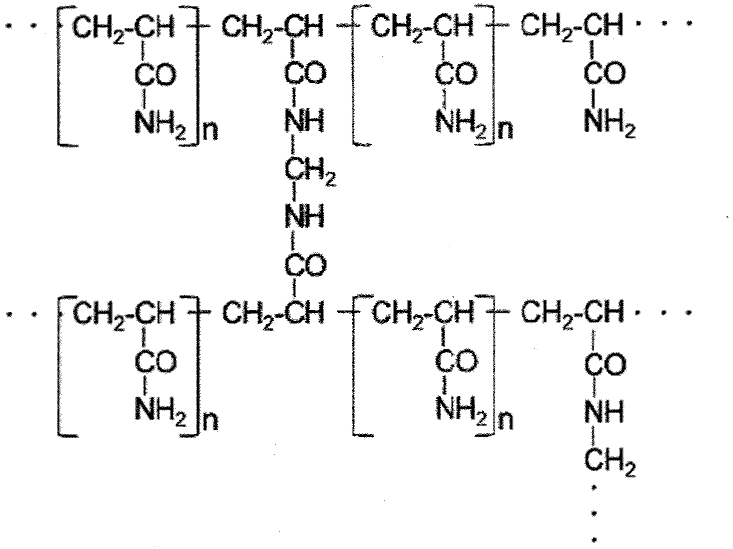

Note that, among substances in which particles having a size approximately from 1 nm to 1000 nm are floating or being suspended in a gas, a liquid, or a solid matter, that is, substances referred to as a dispersed system, "gel" refers to a substance in a solid state. Furthermore, a "gel state" refers to the substance being a "gel" or a "substance equivalent to a gel."

The granular body for lithium adsorption according to the present embodiment includes those that are in a state where water content is low. In the state where water content is low, a density of the granular body for lithium adsorption can be decreased, and a cost for transportation can be reduced.

### <Producing Method of Granular Body for Lithium Adsorption>

A producing method of granular body for lithium adsorption disclosed in the present specification includes a suspension polymerization step of suspending an aqueous solution for suspension polymerization obtained by mixing a raw material of hydrous polymer, a lithium adsorbent precursor, and a polymerization initiator in a dispersion medium to obtain a granular body for lithium adsorption. With this aspect, a hydrous polymer as a gel-state granular body containing the lithium adsorbent precursor can be obtained.

In the producing method of granular body for lithium adsorption, it is preferred to include a mixing step of mixing the raw material of hydrous polymer and the lithium adsorbent precursor to obtain a mixed aqueous solution before the suspension polymerization step, and in the suspension polymerization step after the mixing step, the aqueous solution for suspension polymerization obtained by mixing the polymerization initiator into the mixed aqueous solution is used. With this aspect, the raw material of hydrous polymer and the lithium adsorbent precursor can be mixed before the polymerization starts, and a bias between these can be decreased to reduce composition spots.

In the producing method of granular body for lithium adsorption, it is preferred that the hydrous polymer is polyacrylamide, and raw materials of the polyacrylamide are acrylamide and N,N'-Methylenebisacrylamide. With this aspect, the polyacrylamide can be easily obtained.

In the producing method of granular body for lithium adsorption, the suspension polymerization step is preferably performed in a nitrogen atmosphere. With this aspect, deterioration caused by oxidation of the hydrous polymer can be avoided.

In the producing method of granular body for lithium adsorption, it is preferred to have a solid-liquid separating step of filtering the granular body for lithium adsorption under reduced pressure to obtain a filtered granular body for lithium adsorption after the suspension polymerization step. With this aspect, a removal efficiency of the dispersion medium attached to the granular body for lithium adsorption can be increased.

In the producing method of granular body for lithium adsorption, it is preferred to include a washing step of washing the filtered granular body for lithium adsorption to obtain a washed granular body for lithium adsorption after the solid-liquid separating step. With this aspect, the removal efficiency of the dispersion medium can be further increased.

### (First Embodiment)

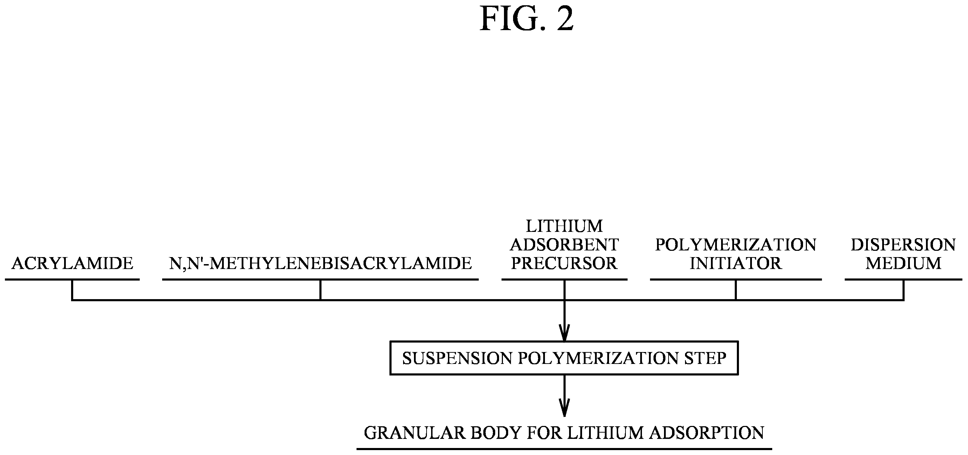

A flowchart of a producing method of granular body for lithium adsorption according to a first embodiment is illustrated in Fig. 2. Each step will be described below based on this diagram.

### (Suspension Polymerization Step)

In the producing method of granular body for lithium adsorption according to the present embodiment, the suspension polymerization step is performed. In this suspension polymerization step, the aqueous solution for suspension polymerization obtained by mixing the raw material of hydrous polymer, the lithium adsorbent precursor, and the polymerization initiator is suspended in the dispersion medium to obtain the granular body for lithium adsorption.

In the suspension polymerization step, first, the raw material of hydrous polymer is dissolved in water so as to obtain a preliminarily determined concentration, and the lithium adsorbent precursor is added into the aqueous solution so as to obtain a preliminarily determined proportion. Furthermore, by adding a preliminarily determined amount of the polymerization initiator, the aqueous solution for suspension polymerization is obtained. Note that, in a suspension polymerization preparing step, the mixing of the raw material of hydrous polymer, the lithium adsorbent precursor, and the polymerization initiator is not limited to the above-described order. A case where everything is dissolved in water at once, and a case where the raw material of hydrous polymer and the polymerization initiator are dissolved in water first are also included. However, in a case where the polymerization initiator is added first, it is preferred to cool the raw material of hydrous polymer in advance in order to retard the polymerization progress.

The hydrous polymer allows forming a gel-state granular body. In addition, the hydrous polymer constituting the granular body for lithium adsorption according to the present embodiment is required to have stability against chemical substances, such as acid. The hydrous polymer containing the amide group includes polyacrylamide.

When the hydrous polymer is polyacrylamide, the raw materials of the hydrous polymer are preferably acrylamide and N,N'-Methylenebisacrylamide. With this aspect, the polyacrylamide can be obtained easily.

The lithium adsorbent precursor is a compound, such as lithium manganese oxide or lithium titanate. Examples thereof include: Li_{1.6}Mn_{1.6}O₄, Li_{1.33}Mn_{1.67}0₄, Li₄Mn₅O₁₂, Li₄Ti₅O₁₂, Li₂TiO₃, Li₂MnO₃, Li₂SnO₃, LiMn₂O₄, LiAlO₂, LiCuO₂, LiTiO₂, Li₄TiO₄, Li₇Ti₁₁O₂₄, Li₃VO₄, Li₂Si₃O₇, LiFePO₄, LiMnPO₄, and Li₂CuP₂O₇.

The polymerization initiator may be any substance as long as it allows polymerization of the raw material of hydrous polymer. For example, in a case where the hydrous polymer is polyacrylamide, and the raw materials thereof are acrylamide and N,N'-Methylenebisacrylamide, the polymerization initiator can be a combination of ammonium persulfate (APS) and tetramethylethylenediamine (TEMED).

In the suspension polymerization step, for example, the dispersion medium in a liquid state is added into a container having a predetermined size, and while stirring the medium with a stirrer, the aqueous solution for suspension polymerization is added by a preliminarily determined amount per unit time. Here, the liquid-state dispersion medium is preferably silicon oil, for example. However, it is not limited to this, and may be any hydrophobic solvent. Moreover, a gaseous matter, that is gas, can also be used as the dispersion medium. In this case, it is preferred to use an atomizer.

The suspension polymerization step is preferably performed in a nitrogen atmosphere in which a proportion of nitrogen gas is in a preliminarily determined range. In this case, it is further preferred that the proportion of nitrogen gas is 99% or more of a composition of gas in the nitrogen atmosphere.

The granular body for lithium adsorption obtained in the suspension polymerization step is contained in a mixture with the dispersion medium and the like, and is transferred to a user of the granular body for lithium adsorption in this state, or undergoes the solid-liquid separating step and the like disclosed in a third embodiment and the like described later to be used for lithium adsorption.

### (Second Embodiment)

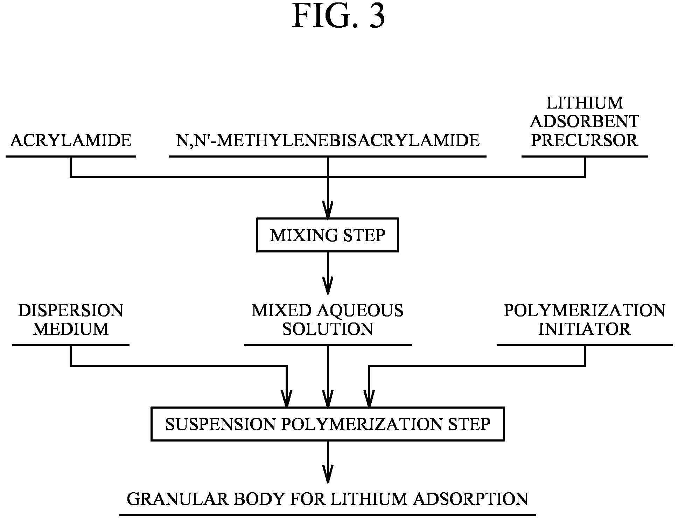

A flowchart of a producing method of granular body for lithium adsorption according to a second embodiment is illustrated in Fig. 3. The second embodiment is different from the first embodiment in the point that the mixing step of mixing the raw material of hydrous polymer and the lithium adsorbent precursor to obtain the mixed aqueous solution is provided before the suspension polymerization step, and in the suspension polymerization step after the mixing step, the aqueous solution for suspension polymerization obtained by mixing the polymerization initiator into the mixed aqueous solution is used. Other parts are the same as the first embodiment, and therefore description of the parts that are the same as the first embodiment will be omitted.

### (Mixing Step)

In the producing method of granular body for lithium adsorption according to the present embodiment, the mixing step is performed before the suspension polymerization step. In this mixing step, the raw material of hydrous polymer and the lithium adsorbent precursor are mixed to obtain the mixed aqueous solution.

In the mixing step, first, the raw material of hydrous polymer is dissolved in water so as to obtain a preliminarily determined concentration. Then, by adding the lithium adsorbent precursor into the aqueous solution so as to obtain a preliminarily determined proportion and stirring the aqueous solution, the raw material of hydrous polymer and the lithium adsorbent precursor are mixed. This mixed liquid is the mixed aqueous solution.

### (Suspension Polymerization Step)

In the suspension polymerization step of the present embodiment, the aqueous solution for suspension polymerization obtained by mixing the polymerization initiator into the mixed aqueous solution obtained in the mixing step is used, and this aqueous solution for suspension polymerization is suspended in the dispersion medium to obtain the granular body for lithium adsorption.

### (Third Embodiment)

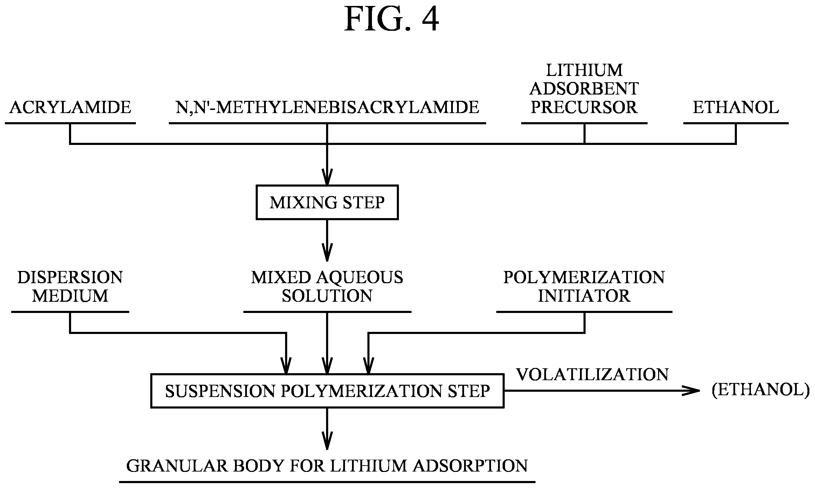

A flowchart of a producing method of granular body for lithium adsorption according to a third embodiment is illustrated in Fig. 4. The third embodiment is different from the second embodiment in the point that, in the mixing step, a preliminarily determined amount of ethanol is added besides the raw material of hydrous polymer and the lithium adsorbent precursor. Other parts are the same as the second embodiment, and therefore description of the parts that are the same as the second embodiment will be omitted. Note that, while the third embodiment has an aspect in which the predetermined amount of ethanol is added in the mixing step of the second embodiment, an aspect in which the predetermined amount of ethanol is added in the producing method of granular body for lithium adsorption of the first embodiment is also included in the producing method of granular body for lithium adsorption of the present application.

The amount of ethanol to be added is determined according to the weight of the powder (lithium adsorbent precursor) mixed in the mixing step. The added ethanol is preferably volatilized during stirring in the suspension polymerization step.

### (Fourth Embodiment)

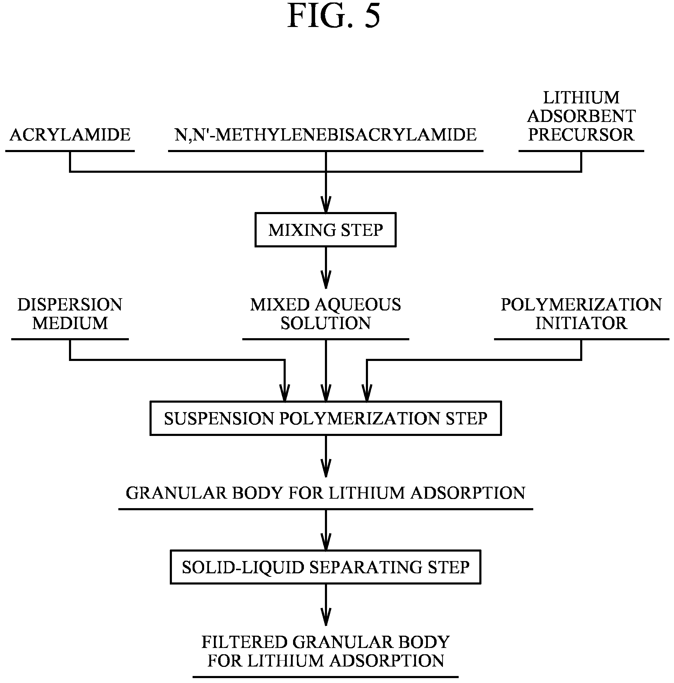

A flowchart of a producing method of granular body for lithium adsorption according to a fourth embodiment is illustrated in Fig. 5. The fourth embodiment is different from the second embodiment in the point that the solid-liquid separating step is provided after the suspension polymerization step. Other parts are the same as the second embodiment, and therefore description of the parts that are the same as the second embodiment will be omitted. Note that, while the fourth embodiment has an aspect in which the solid-liquid separating step is added after the producing method of granular body for lithium adsorption in the second embodiment, an aspect in which the solid-liquid separating step is added after the producing method of granular body for lithium adsorption of the first embodiment is also included in the producing method of granular body for lithium adsorption of the present application.

### (Solid-liquid Separating Step)

The solid-liquid separating step is a step of filtering the granular body for lithium adsorption, which is obtained in the suspension polymerization step, under reduced pressure to obtain the filtered granular body for lithium adsorption. In the suspension polymerization step, since the granular body for lithium adsorption is in a state of being immersed in a liquid, the gel-state granular body for lithium adsorption and the liquid are separated in the solid-liquid separating step. At this point, the granular body for lithium adsorption is preferably filtered under reduced pressure of a preliminarily determined pressure. For this filtration under reduced pressure, it is preferred to use a vacuum pump having an ultimate vacuum of 10 hPa, for example. Note that, the filtered granular body for lithium adsorption obtained in the solid-liquid separating step is one aspect of the granular body for lithium adsorption.

By having the solid-liquid separating step of filtering the granular body for lithium adsorption under reduced pressure to obtain the filtered granular body for lithium adsorption after the suspension polymerization step, the removal efficiency of the dispersion medium attached to the granular body for lithium adsorption can be increased.

### (Fifth Embodiment)

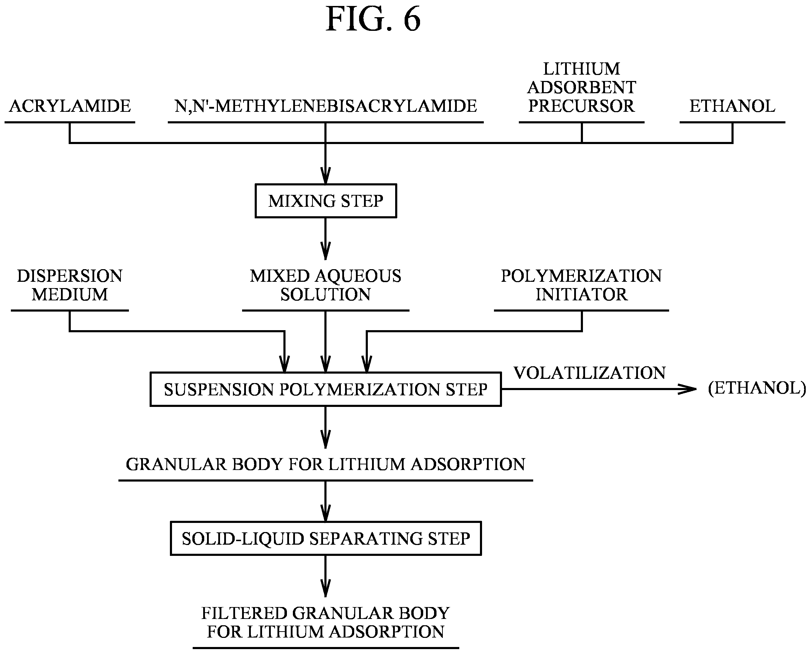

A flowchart of a producing method of granular body for lithium adsorption according to a fifth embodiment is illustrated in Fig. 6. The fifth embodiment is different from the fourth embodiment in the point that, in the mixing step, the preliminarily determined amount of ethanol is added besides the raw material of hydrous polymer and the lithium adsorbent precursor. Other parts are the same as the fourth embodiment, and therefore description of the parts that are the same as the fourth embodiment will be omitted. Note that, while the fifth embodiment has an aspect in which the predetermined amount of ethanol is added in the mixing step of the fourth embodiment, an aspect in which the predetermined amount of ethanol is added in the producing method of granular body for lithium adsorption of the first embodiment is also included in the producing method of granular body for lithium adsorption of the present application.

The amount of ethanol to be added is determined according to the weight of the powder (lithium adsorbent precursor) mixed in the mixing step. The added ethanol is preferably volatilized during stirring in the suspension polymerization step.

### (Sixth Embodiment)

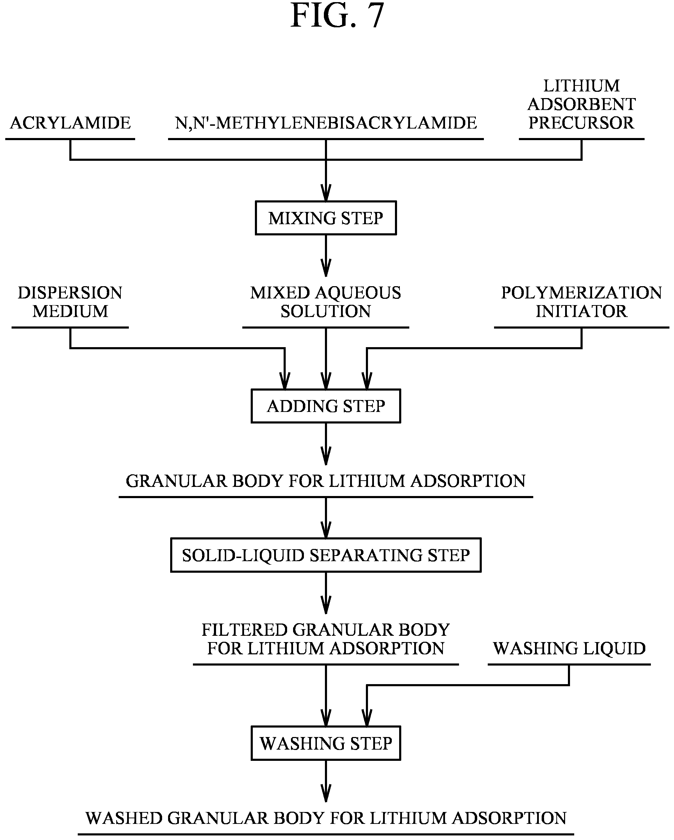

A flowchart of a producing method of granular body for lithium adsorption according to a sixth embodiment is illustrated in Fig. 7. The sixth embodiment is different from the fourth embodiment in the point that the washing step is provided after the solid-liquid separating step. Other parts are the same as the fourth embodiment, and therefore description of the parts that are the same as the fourth embodiment will be omitted. Note that, while the sixth embodiment has an aspect in which the washing step is added after the producing method of granular body for lithium adsorption of the fourth embodiment, an aspect in which the solid-liquid separating step is added after the producing method of granular body for lithium adsorption of the first embodiment, and the washing step is added thereafter is also included in the producing method of granular body for lithium adsorption of the present application.

### (Washing Step)

The washing step is a step of washing the filtered granular body for lithium adsorption obtained in the solid-liquid separating step to obtain the washed granular body for lithium adsorption. Since the filtered granular body for lithium adsorption after completing the solid-liquid separating step is in state where a coat of a hydrophobic liquid remains outside the filtered granular body for lithium adsorption, this coat is removed by the washing step. This is because, in a state where the coat of the hydrophobic liquid remains, the contact between the liquid containing lithium and the granular body for lithium adsorption is hindered by this coat. Note that, the washed granular body for lithium adsorption obtained in the washing step is one aspect of the granular body for lithium adsorption. In this washing step, a liquid such as pure water having a predetermined purity, methanol, or ethanol is used as necessary.

By having the washing step after the solid-liquid separating step, the removal efficiency of the dispersion medium can be further increased.

### (Seventh Embodiment)

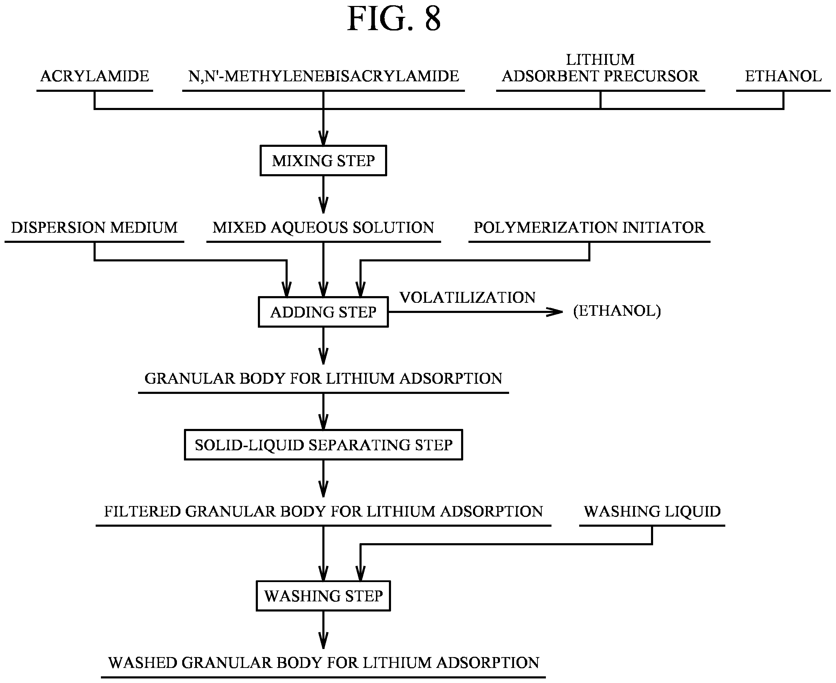

A flowchart of a producing method of granular body for lithium adsorption according to a seventh embodiment is illustrated in Fig. 8. The seventh embodiment is different from the sixth embodiment in the point that, in the mixing step, the preliminarily determined amount of ethanol is added besides the raw material of hydrous polymer and the lithium adsorbent precursor. Other parts are the same as the sixth embodiment, and therefore description of the parts that are the same as the sixth embodiment will be omitted. Note that, while the seventh embodiment has an aspect in which the predetermined amount of ethanol is added in the mixing step of the sixth embodiment, an aspect in which the predetermined amount of ethanol is added in the producing method of granular body for lithium adsorption of the first embodiment is also included in the producing method of granular body for lithium adsorption of the present application.

The amount of ethanol to be added is determined according to the weight of the powder (lithium adsorbent precursor) mixed in the mixing step. The added ethanol is preferably volatilized during stirring in the suspension polymerization step.

### [Example]

While the following describes specific examples of the granular body for lithium adsorption and the producing method thereof according to the present invention, the present invention is not limited to these examples.

### (Example 1)

### <Preparation of Granular Body for Lithium Adsorption>

The present example has been performed according to the above-described second embodiment. First, the mixing step was performed. As the raw material of hydrous polymer, acrylamide in a powder state and N,N'-Methylenebisacrylamide in a powder state were prepared. The ratio between the acrylamide and the N,N'-Methylenebisacrylamide was 100:3. These raw materials were dissolved in industrial pure water, and an aqueous solution in which a concentration of these raw materials was 50 wt% was produced. For 8 g of this aqueous solution, 3.2 g of lithium manganese oxide as the lithium adsorbent precursor was mixed to obtain a mixed aqueous solution.

Next, as the first half of a suspension polymerization step, an adding step was performed. In the adding step, 40 µL of ammonium persulfate and 8 µL of tetramethylethylenediamine were added as the polymerization initiator into the above-described mixed aqueous solution to obtain the aqueous solution for suspension polymerization.

Next, the second half of the suspension polymerization step was performed. In the second half of the suspension polymerization step, the aqueous solution for suspension polymerization was suspended in a silicon oil as the dispersion medium. 72 mL of the silicon oil was prepared in a container, a stirring blade was disposed in the silicon oil, and by this stirring blade rotating at 300 rpm, the silicon oil was stirred. This stirring was performed in a nitrogen atmosphere having a nitrogen gas concentration of 99% or more and under a constant temperature of 30°C. In this state, the aqueous solution for suspension polymerization was dropped and polymerization was performed for 3 hours to obtain a gel-state granular body for lithium adsorption.

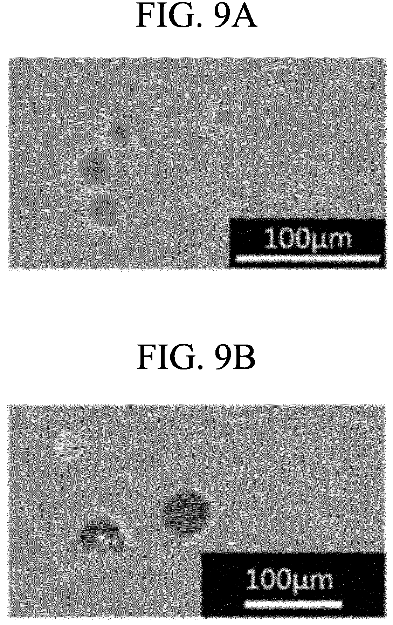

Next, the solid-liquid separating step and the washing step were performed. By undergoing the solid-liquid separating step and the washing step, the washed granular body for lithium adsorption was obtained. An SEM photograph of the granular body for lithium adsorption after this washing step and before being used for the lithium adsorption is presented in Fig. 9A. What are indicated as circular shapes in the figure are the granular body for lithium adsorption. The part located in an outer peripheral portion of this circular shape and is indicated in a light color is the gel-state hydrous polymer, and the part located therein and is indicated in a dark color is the lithium adsorbent precursor.

An eluting step of turning the lithium adsorbent precursor into the lithium adsorbent using the obtained washed granular body for lithium adsorption, and an adsorbing step of causing the lithium adsorbent and the lithium containing solution to contact one another to allow lithium to be adsorbed in the lithium adsorbent were each performed 15 times. The granular body for lithium adsorption after performing the steps 15 times is indicated in Fig. 9B. Similarly to Fig. 9A, it can be seen that the gel-state hydrous polymer is present in the outer periphery portion of the granular body for lithium adsorption, and the lithium adsorbent precursor is present inside the outer periphery portion. From this figure, it has been understood that the lithium adsorbent did not flow out of the granular body for lithium adsorption and the durability of the granular body has improved. Moreover, when measuring the weights of the granular body for lithium adsorption before and after the washing step, that is, the filtered granular body for lithium adsorption and the washed granular body for lithium adsorption, the weight change was less than 1% of the filtered granular body for lithium adsorption. In a granulated body for lithium adsorption produced using an alumina binder or the like, usually the weight decreases by 10 weight% or more between before and after the washing step. This is considered to be because an initial disintegration occurs to the granulated body. Compared with the case of this granulated body, in the granular body for lithium adsorption, the weight change was significantly smaller, and from this point, it has been understood that the disintegration has decreased and the durability has improved.

## Claims

1. A granular body for lithium adsorption, comprising:
a lithium adsorbent precursor; and
a hydrous polymer containing the precursor, wherein
the hydrous polymer allows forming a gel-state granular body.

2. The granular body for lithium adsorption according to claim 1, wherein
the granular body for lithium adsorption is a gel-state granular body.

3. The granular body for lithium adsorption according to claim 1 or 2, wherein
the hydrous polymer contains an amide group.

4. The granular body for lithium adsorption according to claim 3, wherein
the hydrous polymer containing the amide group is polyacrylamide.

5. The granular body for lithium adsorption according to any of claims 1 to 4, wherein the lithium adsorbent precursor is lithium manganese oxide.

6. A producing method of granular body for lithium adsorption, comprising
a suspension polymerization step of suspending an aqueous solution for suspension polymerization obtained by mixing a raw material of hydrous polymer, a lithium adsorbent precursor, and a polymerization initiator in a dispersion medium to obtain a granular body for lithium adsorption.

7. The producing method of granular body for lithium adsorption according to claim 6, further comprising
a mixing step of mixing the raw material of hydrous polymer and the lithium adsorbent precursor to obtain a mixed aqueous solution before the suspension polymerization step, wherein
in the suspension polymerization step after the mixing step, the aqueous solution for suspension polymerization obtained by mixing the polymerization initiator into the mixed aqueous solution is used.

8. The producing method of granular body for lithium adsorption according to claim 7, wherein
in the mixing step, a preliminarily determined amount of ethanol is added and then mixed.

9. The producing method of granular body for lithium adsorption according to any of claims 6 to 8, wherein
the hydrous polymer is polyacrylamide, and
raw materials of the polyacrylamide are acrylamide and N,N'-Methylenebisacrylamide.

10. The producing method of granular body for lithium adsorption according to any of claims 6 to 9, wherein
the suspension polymerization step is performed in a nitrogen atmosphere in which a proportion of nitrogen gas is in a preliminarily determined range.
